# EUROPÄISCHE PATENTSCHRIFT

(11) **EP 0 781 384 B1**
(45) Veröffentlichungstag und Bekanntmachung des Hinweises auf die Patenterteilung: **29.07.1998**
(21) Anmeldenummer: 95932690.1
(22) Anmeldetag: 08.09.1995
(51) Int. Cl.: F16H 61/00

(54) **VERFAHREN ZUM STEUERN EINES STUFENLOSEN GETRIEBES**
METHOD OF CONTROLLING A CONTINUOUSLY VARIABLE TRANSMISSION
PROCEDE DE COMMANDE D'UNE TRANSMISSION A VARIATION CONTINUE

(30) Priorität: 14.09.1994 DE 4432678
(43) Veröffentlichungstag der Anmeldung: 02.07.1997
(73) Patentinhaber: ZF FRIEDRICHSHAFEN Aktiengesellschaft, 88038 Friedrichshafen (DE)
(72) Erfinder: SPEICHER, Patrick, D-88094 Oberteuringen (DE); VORNDRAN, Ralf, D-88131 Bodolz (DE)
(86) Internationale Anmeldenummer: EP9503528
(87) Internationale Veröffentlichungsnummer: WO9608664

(56) Entgegenhaltungen:
- DE-A- 3 902 692
- DE-A- 4 120 546
- DE-A- 4 312 415
- DE-A- 4 425 528
- US-A- 4 945 483

## Beschreibung

Die Erfindung betrifft ein Verfahren zum Steuern eines elektronisch gesteuerten, stufenlosen Getriebes. Hierbei legt ein elektronisches Steuergerät aufgrund von Eingangsgrößen den Betriebspunkt des stufenlosen Getriebes fest.

Stufenlose Getriebe besitzen ein erstes Kegelscheibenpaar auf einer Antriebswelle und ein zweites Kegelscheibenpaar auf einer Abtriebswelle. Jedes Kegelscheibenpaar besteht aus einer in axialer Richtung feststehenden ersten Scheibe und einer in axialer Richtung verschiebbaren zweiten Kegelscheibe. Zwischen den Kegelscheibenpaaren läuft ein Umschlingungsorgan, zum Beispiel ein Schubgliederband.

Bei einem aus der Antriebstechnik 24 (1985) Nr. 2 bekannten elektronisch gesteuerten, stufenlosen Getriebe ist es möglich, durch einen Programmwahlschalter zwischen einer ersten Betriebsart Economy und einer zweiten Betriebsart Sport umzuschalten. In der ersten Betriebsart wird eine Übersetzung des stufenlosen Getriebes so eingestellt, daß der Betriebspunkt einer Brennkraftmaschine, welche das stufenlose Getriebe antreibt, im Kennfeld der Brennkraftmaschine durch die Inseln des geringsten spezifischen Verbrauchs führt. In der zweiten Betriebsart wird die Übersetzung des stufenlosen Getriebes so eingestellt, daß die Brennkraftmaschine ein maximales Moment oder eine maximale Leistung abgibt.

Aus der gattungsgemäßen DE-A-41 20 546 ist ein Verfahren zum Steuern eines stufenlosen Kraftfahrzeuggetriebes bekannt. Bei diesem Steuerungsverfahren wird der Bereich zwischen verbrauchs- und leistungsoptimiert schrittweise von fünf Kennlinien abgedeckt. Eine Auswahl der Kennlinie erfolgt aufgrund einer zusätzlichen Kenngröße, als Fahraktivität bezeichnet. Nachteilig bei dieser Lösung ist, daß sie in vielen Fällen nicht ausreicht.

Die Erfindung hat die Aufgabe, eine Betriebsstrategie für ein stufenloses Getriebe bereitzustellen.

Eine erste Lösung der Aufgabe besteht erfindungsgemäß darin, daß der Betriebspunkt zusätzlich in Abhängigkeit einer Fahrzeuggeschwindigkeit festgelegt wird und die Kenngröße beliebige diskrete Werte zwischen Null und Zwei annehmen kann. Bei einem Wert der Kenngröße von Null wird ein Verbrauchsoptimum eingestellt. Bei einem Wert von Eins wird ein von einem Fahrer maximal vorgebbares Leistungsoptimum, zum Beispiel aufgrund einer Fahraktivität, eingestellt. Bei einem Wert von Zwei wird die maximale Motorbremswirkung bzw. die maximale Leistung einer Brennkraftmaschine eingestellt. Diese Lösung bietet den Vorteil, daß erhöhter Fahrwiderstand, zum Beispiel aufgrund einer Steigung oder erhöhter Masse wegen eines Anhängers, zu einem höheren Wert der Kenngröße führt. Diese wiederum bewirkt, daß der Betriebspunkt der Brennkraftmaschine zu höheren Drehzahlwerten korrigiert wird. Hierdurch wird der Einfluß des erhöhten Fahrwiderstandes kompensiert. Der Fahrer ist somit nicht gezwungen, einen höheren Drosselklappenwert einzustellen.
Ein weiterer Vorteil der Lösung besteht darin, daß zum Beispiel bei Bergabfahrt aufgrund eines höheren Wertes der Kenngröße ebenfalls der Betriebspunkt zu höheren Drehzahlwerten der Brennkraftmaschine korrigiert wird. Hierdurch wird die Motorbremswirkung der Brennkraftmaschine ausgenützt.

Eine zweite Lösung der Aufgabe besteht erfindungsgemäß darin, daß der Betriebspunkt über ein Kennfeld festgelegt ist, dieses eine Abhängigkeit einer Übersetzung iV von einer Drosselklappenstellung, einer Fahrzeuggeschwindigkeit und einer Kenngröße K1 darstellt. Das Übersetzungsverhältnis iV berechnet sich aus dem Quotienten der Drehzahlen des ersten Kegelscheibenpaares zum zweiten Kegelscheibenpaar.

Unter Betriebspunkt im Sinne der Erfindung ist ein Vorgabewert der zu erreichenden Drehzahl des ersten Kegelscheibenpaares bzw. der zu erreichenden Übersetzung iV zu verstehen.

In einer Ausgestaltung sowohl zur ersten als auch zur zweiten Lösung wird vorgeschlagen, daß der Betriebspunkt mit steigenden Werten der Kenngröße K1 kontinuierlich zu höheren Drehzahlwerten des ersten Kegelscheibenpaares oder größerer Übersetzung iV verschoben wird. Bei fallenden Werten der Kenngröße K1 wird der Betriebspunkt kontinuierlich zu niederen Drehzahlwerten des ersten Kegelscheibenpaares oder einer kleineren Übersetzung iV verschoben. Diese Lösung bietet den Vorteil, daß jeder beliebige Betriebspunkt eingestellt werden kann. Bei einem kontinuierlichen Verlauf der Kenngröße K1 erfolgt der Übergang von einem alten Betriebspunkt zu einem neuen Betriebspunkt ebenfalls kontinuierlich. Es erfolgen somit keine Stufensprünge, was wiederum eine verbesserte Fahrbarkeit bewirkt.

In einer Ausgestaltung hierzu wird vorgeschlagen, daß das elektronische Steuergerät aus den Eingangsgrößen die Kenngröße K1 bestimmt, wobei diese einen Betriebszustand repräsentiert und jeder Betriebszustand auf einen Wert der Kenngröße K1 abgebildet wird.

In den Zeichnungen ist ein Ausführungsbeispiel dargestellt.
Es zeigen:
- Fig. 1: ein Blockschaltbild eines elektronisch gesteuerten, stufenlosen Getriebes und
- Fig. 2: ein Betriebskennfeld.

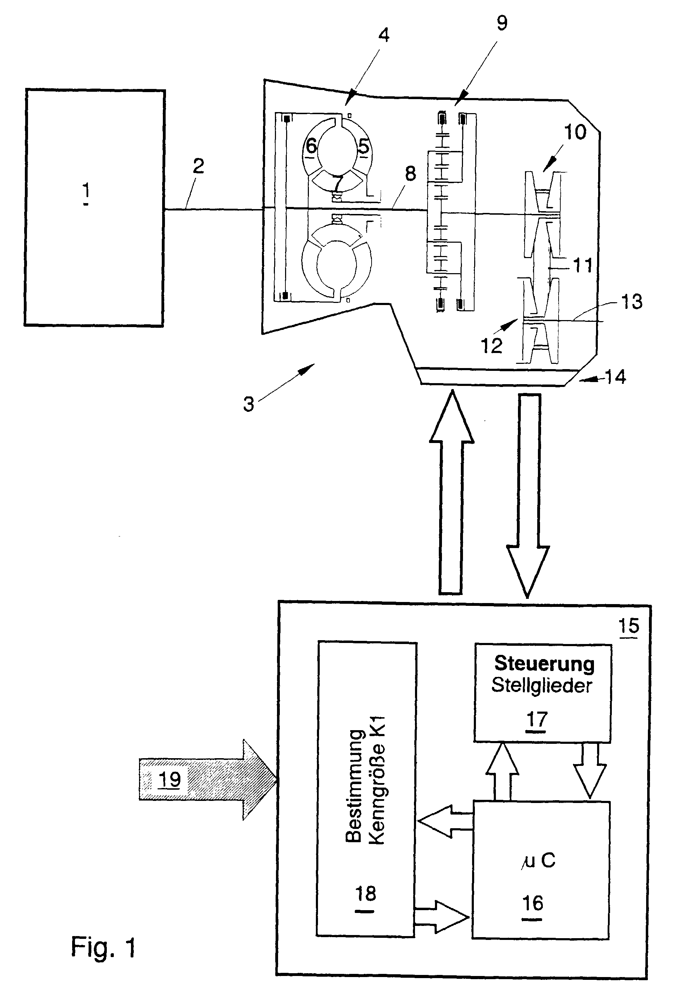

In Fig. 1 ist ein stufenloses Getriebe 3 dargestellt. Das stufenlose Getriebe 3 ist mit einer Brennkraftmaschine 1 über eine Antriebswelle 2 verbunden. Das stufenlose Getriebe 3 besteht aus den Baugruppen: hydrodynamischer Wandler mit Überbrückungskupplung 4, Wendesatz 9, erstes Kegelscheibenpaar 10, zweites Kegelscheibenpaar 12, Umschlingungsorgan 11 und hydraulisches Steuergerät 14. Die Antriebswelle 2 treibt den hydrodynamischen Wandler 4 an. Dieser besteht bekanntermaßen aus einem Pumpenrad 5, einem Turbinenrad 6 und einem Leitrad 7. Wie in Fig. 1 dargestellt, kann sich zum hydrodynamischen Wandler 4 eine Wandlerüberbrückungskupplung befinden. Das Turbinenrad 6 bzw. die Wandlerüberbrückungskupplung sind mit einer Getriebeeingangswelle 8 verbunden. Die Getriebeeingangswelle 8 treibt einen Wendesatz 9 an. Über den Wendesatz 9 wird die Drehzahl der Getriebeeingangswelle 8 direkt auf das erste Kegelscheibenpaar 10 übertragen oder es erfolgt eine Drehrichtungsumkehr für Rückwärtsfahrt. Kernstück des stufenlosen Getriebes 3 ist ein erstes Kegelscheibenpaar 10, ein zweites Kegelscheibenpaar 12 und ein Umschlingungsorgan 11. Bekanntermaßen besteht jedes Kegelscheibenpaar aus einer in axialer Richtung feststehenden ersten Kegelscheibe und einer in axialer Richtung verschiebbaren zweiten Kegelscheibe. Zwischen diesen Kegelscheibenpaaren 10 und 12 läuft das Umschlingungsorgan 11, zum Beispiel ein Schubgliederband. Aufgrund der axialen Verschiebbarkeit der zweiten Kegelscheibe ändert sich der Laufradius des Umschlingungsorgans 11 und somit die Drehzahl der Getriebeeingangswelle 8 bzw. die Übersetzung des stufenlosen Getriebes 3. Der Abtrieb erfolgt über die Abtriebswelle 13.
Das stufenlose Getriebe 3 wird von einem elektronischen Steuergerät 15 mittels elektromagnetischer Stellglieder gesteuert. Über die nicht dargestellten elektromagnetischen Stellglieder werden die Kupplungen und Bremsen bzw. deren Druckverlauf gesteuert. Die elektromagnetischen Stellglieder befinden sich in dem hydraulischen Steuergerät 14. Vom elektronischen Steuergerät 15 sind als Blöcke dargestellt: ein Micro-Controller 16, ein Funktionsblock Steuerung Stellglieder 17 und ein Funktionsblock Bestimmung Kenngröße K1 18. Am elektronischen Steuergerät 15 sind Eingangsgrößen 19 angeschlossen. Die Eingangsgrößen 19 sind zum Beispiel das Signal einer Drosselklappenstellung, das Signal einer Fahrgeschwindigkeit, eine Drehzahl einer Getriebeeingangswelle, eine Drehzahl der Abtriebswelle, die Temperatur eines Hydraulikmediums und eine Fahraktivität.

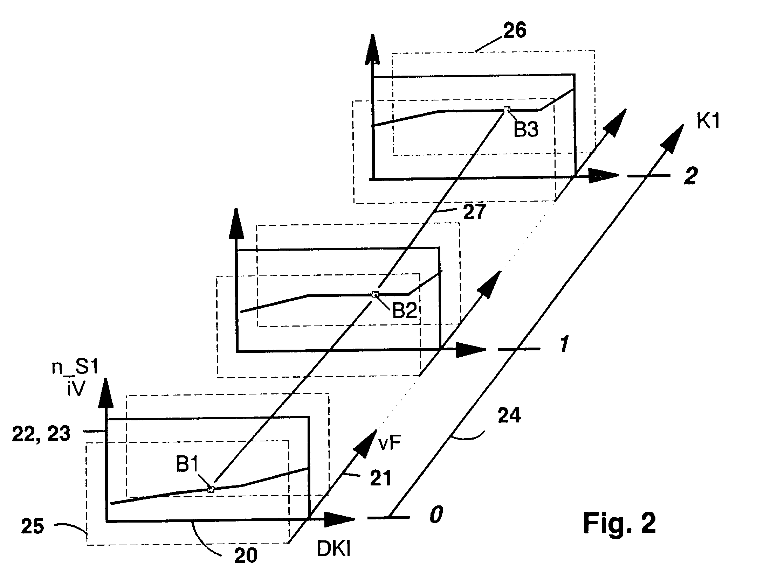

Fig. 2 zeigt ein Betriebskennfeld eines stufenlosen Getriebes 3. Eingangsgrößen für das Betriebskennfeld sind der Wert einer Drosselklappenstellung 20, der Wert einer Fahrzeuggeschwindigkeit 21 und der Wert einer Kenngröße K1 24. Ausgangsgröße des Betriebskennfeldes ist eine Drehzahl des ersten Kegelscheibenpaares 22 oder eine Übersetzung iV 23. Die Übersetzung iV berechnet sich aus dem Quotienten der Drehzahlen des ersten Kegelscheibenpaares zu dem zweiten Kegelscheibenpaar. Bezugszeichen 25 zeigt ein erstes Kennfeld und Bezugszeichen 26 ein n-tes Kennfeld. Die Kenngröße K1 24 kann beliebige diskrete Werte zwischen Null und Zwei annehmen. Bei einem Wert von Null wird ein Verbrauchsoptimum eingestellt. Bei einem Wert von Eins wird ein vom Fahrer maximal vorgebbares Leistungsoptimum, zum Beispiel aufgrund einer Fahraktivität, eingestellt. Bei einem Wert von zwei wird die maximale Motorbremswirkung bzw. die maximale Leistung der Brennkraftmaschine 1 eingestellt. Die Kenngröße Kl 24 repräsentiert einen Betriebszustand, wobei jeder Betriebszustand durch einen Wert der Kenngröße Kl 24 abgebildet wird. Zum Beispiel erhöhter Fahrwiderstand aufgrund einer Steigung oder erhöhter Masse wegen eines Anhängers führt zu einem höheren Wert der Kenngröße K1 24. Diese wiederum bewirkt, daß der Betriebspunkt der Brennkraftmaschine zu höheren Drehzahlwerten korrigiert wird oder die Übersetzung iV des stufenlosen Getriebes zu höheren Werten. Hierdurch wird der Einfluß des erhöhten Fahrwiderstandes kompensiert. Unter Betriebspunkt im Sinne der Erfindung ist ein Vorgabewert der zu erreichenden Drehzahl des ersten Kegelscheibenpaares 22 bzw. der zu erreichenden Übersetzung iV 23 zu verstehen. Dieser so ermittelte Vorgabewert wird üblicherweise durch ein nachgeordnetes Filter verändert und auf einen Regler geführt, der die Drehzahl bzw. die Übersetzung der Kegelscheiben entsprechend verändert. Wie aus Fig. 2 ersichtlich, wird der Betriebspunkt mit steigenden Werten der Kenngröße Kl 24 kontinuierlich zu höheren Drehzahlwerten des ersten Kegelscheibenpaares 22 oder größerer Übersetzung iV 23 verschoben bzw. bei fallenden Werten der Kenngröße Kl 24 umgekehrt. Es kann jeder beliebige Betriebspunkt eingestellt werden. Bei einem kontinuierlichen Verlauf der Kenngröße Kl 24 erfolgt somit der Übergang von einem alten Betriebspunkt zu einem neuen Betriebspunkt ebenfalls kontinuierlich. In Fig. 2 zum Beispiel entlang der Linie 27 B1/B2/B3.

Der Ablauf des Verfahrens ist zum Beispiel folgendermaßen: Aufgrund der Fahraktivität ergibt sich ein K1-Wert von 0,8. Fährt das Fahrzeug einen Berg hinauf, so erhöht sich der K1-Wert aufgrund des Fahrwiderstandes stetig auf einen Wert von zum Beispiel 1,5. Der Betriebspunkt wird demzufolge entsprechend höher eingestellt.

### Bezugszeichen

- 1: Brennkraftmaschine
- 2: Antriebswelle
- 3: stufenloses Getriebe
- 4: hydrodynamischer Wandler mit Überbrückungskupplung
- 5: Pumpenrad
- 6: Turbinenrad
- 7: Leitrad
- 8: Getriebeeingangswelle
- 9: Wendesatz
- 10: erstes Kegelscheibenpaar
- 11: Umschlingungsorgan
- 12: zweites Kegelscheibenpaar
- 13: Abtriebswelle
- 14: hydraulisches Steuergerät
- 15: elektronisches Steuergerät
- 16: Micro-Controller
- 17: Funktionsblock Steuerung Stellglieder
- 18: Funktionsblock Bestimmung Kenngröße K1
- 19: Eingangsgrößen
- 20: Drosselklappenstellung
- 21: Fahrzeuggeschwindigkeit
- 22: Drehzahl erstes Kegelscheibenpaar
- 23: Übersetzung iV
- 24: Kenngröße K1
- 25: erstes Kennfeld
- 26: n-tes Kennfeld
- 27: Linie B1/B2/B3

## Patentansprüche

1. Verfahren zum Steuern eines elektronisch gesteuerten, stufenlosen Getriebes (3), mit jeweils einem Kegelscheibenpaar (10, 12) auf einer An- und Abtriebswelle und einem Umschlingungsorgan (11), mit einem elektronischen Steuergerät (15), welches aufgrund von Eingangsgrößen (19) über ein Kennfeld einen Betriebspunkt des stufenlosen Getriebes (3) festlegt, wobei das Kennfeld eine Abhängigkeit der Drehzahl des ersten Kegelscheibenpaares (22) von einer Drosselklappenstellung (20) und einer Kenngröße K1 (24) darstellt, dadurch **gekennzeichnet,** daß der Betriebspunkt zusätzlich in Abhängigkeit einer Fahrzeuggeschwindigkeit (21) festgelegt wird und die Kenngröße K1 (24) beliebige diskrete Werte zwischen Null und Zwei annehmen kann und wobei bei einem Wert der Kenngröße K1 (24) von Null ein Verbrauchsoptimum, bei einem Wert von Eins ein von einem Fahrer maximal vorgebbares Leistungsoptimum und bei einem Wert von Zwei die maximale Motorbremswirkung bzw. maximale Leistung einer Brennkraftmaschine (1) eingestellt wird.

2. Verfahren nach dem Oberbegriff des Anspruchs 1, dadurch **gekennzeichnet,** daß der Betriebspunkt über ein Kennfeld (25, 26) festgelegt ist, dieses eine Abhängigkeit einer Übersetzung iV (23) von einer Drosselklappenstellung (20), einer Fahrzeuggeschwindigkeit (21) und einer Kenngröße K1 (24) darstellt, wobei sich das Übersetzungsverhältnis iV berechnet aus dem Quotienten der Drehzahlen des ersten Kegelscheibenpaares zu dem zweiten Kegelscheibenpaar (10, 12), die Kenngröße K1 (24) beliebige diskrete Werte zwischen Null und Zwei annehmen kann und wobei bei einem Wert der Kenngröße K1 (24) von Null ein Verbrauchsoptimum, bei einem Wert von Eins ein von einem Fahrer maximal vorgebbares Leistungsoptimum und bei einem Wert von Zwei die maximale Motorbremswirkung bzw. maximale Leistung einer Brennkraftmaschine (1) eingestellt wird.

3. Jerfahren nach Anspruch 1 oder 2, dadurch **gekennzeichnet,** daß der Betriebspunkt mit steigenden Werten der Kenngröße K1 (24) kontinuierlich zu höheren Drehzahlwerten des ersten Kegelscheibenpaares (22) oder größerer Übersetzung iV (23) verschoben wird bzw. der Betriebspunkt mit fallenden Werten der Kenngröße K1 (24) kontinuierlich zu niederen Drehzahlwerten des ersten Kegelscheibenpaares (22) oder kleinerer Übersetzung iV (23) verschoben wird.

4. Verfahren nach Anspruch 3, dadurch **gekennzeichnet,** daß das elektronische Steuergerät (15) aus den Eingangsgrößen (19) die Kenngröße K1 (24) bestimmt, wobei diese einen Betriebszustand repräsentiert und jeder Betriebszustand auf einen Wert der Kenngröße K1 (24) abgebildet wird.

5. Elektronisch gesteuertes, stufenloses Getriebe, bei dem ein Verfahren nach Anspruch 1 oder 2 verwendet wird.

## Claims

1. A method of controlling an electronically controlled, continuously variable transmission (3), comprising a tapered disk pair (10, 12) on each of a drive shaft and a driven shaft and an encircling member (11), and comprising an electronic control device (15) which establishes an operating point for the continuously variable transmission (3) on the basis of input variables (19) by means of a characteristic diagram, wherein the characteristic diagram describes a dependence of the speed of the first tapered disk pair (22) on a throttle position (20) and a parameter K1 (24), characterised in that the operating point is additionally determined as a function of vehicle speed (21) and the parameter K1 (24) may assume any discrete values between zero and two and wherein optimum consumption is set to correspond to a value zero of the parameter K1 (24), a maximum level for optimum power predeterminable by the driver is set to correspond to a value of one and the maximum motor braking effect or maximum power of an internal combustion engine (1) is set to correspond to a value of two.

2. A method according to the precharacterising clause of claim 1, characterised in that the operating point is established by means of a characteristic diagram (25, 26), the latter describing dependence of a transmission ratio iV (23) on a throttle position (20), vehicle speed (21) and a parameter K1 (24), wherein the transmission ratio iV is calculated from the quotient of the speeds of the first tapered disk pair to the second tapered disk pair (10, 12), the parameter K1 (24) may assume any discrete values between zero and two and wherein optimum consumption is set to correspond to a value zero of the parameter K1 (24), a maximum level for optimum power predeterminable by the driver is set to correspond to a value of one and the maximum motor braking effect or maximum power of an internal combustion engine (1) is set to correspond to a value of two.

3. A method according to claim 1 or claim 2, characterised in that, as the values of the parameter K1 (24) increase, the operating point is continuously adjusted to higher speed values of the first tapered disk pair (22) or a greater transmission ratio iV (23) and, as the values of the parameter K1 (24) decrease, the operating point is continuously adjusted to lower speed values of the first tapered disk pair (22) or a lower transmission ratio iV (23).

4. A method according to claim 3, characterised in that the electronic control device (15) determines the parameter K1 (24) from the input variables (19), wherein said parameter K1 (24) represents an operating state and each operating state reflects a value of the parameter K1 (24).

5. An electronically controlled, continuously variable transmission, in which a method according to claim 1 or claim 2 is used.

## Revendications

1. Procédé pour commander une transmission à réglage continu (3) à commande électronique comportant une paire de disques coniques (10, 12) sur un arbre menant et sur un arbre mené ainsi qu'un organe d'enroulement (11), un appareil de commande électronique (15) qui détermine, à partir de grandeurs d'entrée (19) par l'intermédiaire d'un champ caractéristique, un point de fonctionnement de la transmission à réglage continu (3), dans lequel le champ caractéristique représente une dépendance entre la vitesse de rotation de la première paire de disques coniques (22) et une position d'un clapet d'étranglement (20) et une grandeur caractéristique K1 (24), **caractérisé** en ce que le point de fonctionnement est, en plus, dépendant d'une vitesse du véhicule (21), et en ce que la grandeur caractéristique K1 (24) peut adopter n'importe quelle valeur discrète entre zéro et deux, et en ce qu'avec une valeur de zéro sur K1 (24) est réglé un optimum de consommation, avec une valeur de un, un optimum de performance maximale pouvant être prédéterminé par un conducteur, et avec une valeur de deux, l'effet de frein moteur maximal, respectivement la performance maximale d'un moteur à combustion interne (1).

2. Procédé selon le préambule de la revendication 1, **caractérisé** en ce que le point de fonctionnement est défini par l'intermédiaire d'un champ caractéristique (25, 26), lequel est dépendant d'un rapport iV (23), d'une position de clapet d'étranglement (20), d'une vitesse de véhicule (21) et d'une grandeur caractéristique K1 (24), dans lequel le rapport de transmission IV est calculé à partir du quotient des vitesses de rotation de la première paire de disques coniques et de la deuxième paire de disques coniques (10, 12), la grandeur caractéristique K1 (24) pouvant adopter n'importe quelle valeur discrète entre zéro et deux, et dans lequel, lorsque la grandeur caractéristique K1 (24) est nulle, est réglé un optimum de consommation, avec K1 ayant la valeur de un, un optimum de performance maximale prédéterminable par un conducteur, et avec K1 ayant la valeur caractéristique de deux, l'effet de frein moteur maximal, respectivement la performance maximale d'un moteur à combustion interne (1).

3. Procédé selon la revendication 1 ou 2, **caractérisé** en ce que le point de fonctionnement, pour des valeurs croissantes de la grandeur caractéristique K1 (24), augmente en continu vers des valeurs plus grandes de la vitesse de rotation de la première paire de disques coniques (22) ou vers un plus grand rapport iV (23), respectivement pour des valeurs décroissantes de la grandeur caractéristique K1 (24), diminue en continu vers des valeurs plus petites de la vitesse de rotation de la première paire de disques coniques (22) ou vers un plus petit rapport iV (23).

4. Procédé selon la revendication 3, **caractérisé** en ce que l'appareil de commande électronique (15) détermine, à partir des grandeurs d'entrée (19), la grandeur caractéristique K1 (24), laquelle représente alors un état de fonctionnement et chaque état de fonctionnement étant appliqué sur une valeur de la grandeur caractéristique K1 (24).

5. Transmission à réglage continu à commande électronique dans laquelle un procédé selon la revendication 1 ou 2 est utilisé.
